(19) Europäisches Patentamt
European Patent Office
Office européen des brevets

(11) EP 2 570 770 B1

(12) EUROPEAN PATENT SPECIFICATION

(45) Date of publication and mention
of the grant of the patent:
**23.06.2021 Bulletin 2021/25**

(51) Int Cl.:
**G01C 19/5733** *(2012.01)*

(21) Application number: **12182539.2**

(22) Date of filing: **31.08.2012**

(54) **THREE-MASS COUPLED OSCILLATION TECHNIQUE FOR MECHANICALLY ROBUST MICROMACHINED GYROSCOPES**

DREIMASSIGE GEKOPPELTE OSZILLATIONSTECHNIK FÜR MECHANISCH ROBUSTE MIKROVERARBEITETE GYROSKOPE

TECHNIQUE D'OSCILLATION COUPLÉE À TROIS MASSES POUR GYROSCOPES MICRO-USINÉS MÉCANIQUEMENT ROBUSTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2011 US 201161534146 P**

(43) Date of publication of application:
**20.03.2013 Bulletin 2013/12**

(73) Proprietor: **IMEC VZW**
**3001 Leuven (BE)**

(72) Inventor: **ERISMIS, Mehmet Akif**
**3001 Leuven (BE)**

(74) Representative: **Patent Department IMEC**
**IMEC vzw**
**Patent Department**
**Kapeldreef 75**
**3001 Leuven (BE)**

(56) References cited:
**EP-A2- 1 568 968        GB-A- 2 302 177**
**JP-A- 2008 281 485     US-A- 6 044 707**
**US-A1- 2009 193 892**

• **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Micromachined gyroscopes are angular rate sensors that typically operate according to a physical phenomenon called the Coriolis Effect. The Coriolis Effect is, simply, the deflection of moving objects viewed from a rotating frame. For an object mounted to a substrate, the object tends to oscillate (e.g., vibrate, move, or drive) in a perpendicular plane when the substrate rotates. Hence, in order to make use of the Coriolis Effect, micromachined gyroscopes may be composed of an oscillating part comprising at least one mass, and a sensing part which is free to move in a perpendicular plane of the oscillating part. The sensing part is affected by the rotation of the gyroscope, as the oscillating part will be deflected. Under an external rotation, the oscillating mass deflects, and that deflection is sensed via the movement of the sensing part.

The sensitivity of such an oscillating gyroscope depends on its oscillation magnitude. In order to achieve a stable and large sensitivity, stable and large oscillation amplitude is desirable.

Typically, a large oscillation is achieved by using a one-degree-of-freedom (1-DOF) oscillator that is operated at its resonant frequency. Stability is then obtained with the help of stabilization circuitry (e.g., phase lock loops (PLLs), proportional integral (PI) controllers, etc.) to keep the gyroscope operating near this resonance frequency.

In some cases, the 1-DOF oscillator may be operated at non-resonance frequency, thereby reducing the need for stabilisation circuitry. However, a magnitude of the oscillation at non-resonance frequencies will be less than a magnitude of the oscillation at the resonance frequency. When the oscillator is oscillating at non-resonance frequencies, though, changes in the frequency, as well as the quality factor, will have a lesser effect on the oscillation magnitude, as compared to when the oscillator is oscillating at the resonance frequency.

Typical gyroscopes consume 10 to 20 times more power than a typical accelerometer in commercial applications. Some of this power consumption results from the comb-drive actuation used in typical gyroscopes to obtain large oscillation magnitudes. Comb-drive actuation involves electrostatic forces being generated between two comb-like structures. One comb is fixed to the substrate while the other comb is movable. The force developed by the comb-drive actuator is proportional to the change in capacitance between the two combs. However, this capacitance increases with driving voltage difference between both combs, with the coupling area reflected by the number of comb teeth, and the gap between these teeth. As a result, achieving large oscillation magnitudes with comb-drive actuation requires large polarization voltage differences, typically 12V in commercial devices. Such high polarization voltage differences are not conducive to a low-power gyroscope. Another source of this power consumption may be stabilization circuitry, such as PLLs and/or PI controllers, used to stabilize the oscillation increase power consumption of the gyroscope, which is similarly not conducive to a low-power gyroscope. Other sources of power consumption exist as well.

One option for reducing the power consumption of a gyroscope is to use a two-degree-of-freedom (2-DOF) oscillator that includes two masses and, accordingly, has two resonance frequencies. The 2-DOF gyroscope may be operated in between the two resonance frequencies. The amplitude response typically has minimal dependency on the varying quality factor and the resonance frequencies. However, the magnitude of this response is still very small and comparable to the non-resonance response of the 1-DOF oscillator discussed above.

EP patent publication EP1568968 A2 disclose a four-degrees-of-freedom nonresonant micromachined gyroscope utilizing a dynamical amplification both in the 2-DOF drive direction oscillator and the 2-DOF sense-direction oscillator, which are structurally decoupled to achieve large oscillation amplitudes without resonance.

UK patent application GB2302177 A proposes in a micro-mechanical oscillator of an oscillation gyrometer that the two masses oscillating in counter-phase which are connected via a coupling region with a third coupling mass be suspended on at least one suspension spring.

An angular rate sensor is disclosed in US patent publication US2009/0193892 comprising a drive subsystem comprising at least one spring, one anchor an one mass. Another angular rate sensor is disclosed in US patent US6044707 to increase the accuracy of angular rate detection. JP patent publication JP2008281485 gives another example of such a angular velocity detector.

Accordingly, a micromachined gyroscope with reduced power consumption may be desirable. It may be desirable for such a micromachined gyroscope to have a stable oscillation frequency range with a high mechanical amplification between the actuator and the driving part.

SUMMARY

Disclosed is a gyroscope with reduced power consumption, as compared to typical gyroscopes. The disclosed gyroscope is designed without the need of stabilization circuitry, and with a reduced need for driving and controlling circuitry, thereby reducing the power consumption of the gyroscope.

In one aspect, a micromachined gyroscope is disclosed. The micromachined gyroscope comprises a substrate and at least three masses (m1, m2, m3). The first mass m1 is mechanically coupled to the substrate via a mechanical connection k1, the second mass m2 is mechanically coupled to the first mass m1 via a connection k12 and to the substrate via a mechanical connection k2, and the third mass m3 is mechanically coupled to the second mass m2 via a mechanical connection k23. k1 is the spring constant of the mechanical connection between the first mass and the substrate. k2 is the spring constant of the mechanical connection between the second mass and the substrate. k3 is the spring constant of the mechanical connection between the third mass and the substrate. k12 is the spring constant of the mechanical connection between the first mass and the second mass. k23 is the spring constant of the mechanical connection between the second mass and the third mass. The three masses are each configured to oscillate along a first direction x or y.

The following relationships exist between the masses m1, m2, m3, and the mechanical connections k1, k2, k12, k23: the resonance frequency f1 of the first mass is different form the resonance frequency f3 of the third mass and the resonance frequency f2 of the second mass is substantially higher than both f1 and f3. The resonance frequency f1 = (k1+k12)/m1; the resonance frequency f2 = (k2+k12+k23)/m2 and the resonance frequency f3 = -(k23)/m3

In some embodiments, the third mass m3 is also mechanically coupled to the substrate via a mechanically connection k3. k3 is the spring constant of the mechanical connection between the third mass and the substrate.

The masses m1, m2 and m3 can be the driving masses of the gyroscope configured to oscillate along a first direction x. To this end, the gyroscope may further comprise actuators for stimulating these driving masses. These actuators may be parallel plate actuators.

In another embodiment, the micromachined gyroscope further comprises a duplicate m1', m2' and m3' of these 3 mass configuration and this duplicate is configured to oscillate along the first direction x but in opposite phase with these 3 masses m1, m2 and m3.

The masses m1, m2 and m3 can be the sensing masses of the gyroscope, which are configured to oscillate along a first direction y when the gyroscope is rotating.

In some embodiments, the 3 masses m1, m2, m3 can be configured to oscillate in a linear way.

In yet another aspect, a method for designing a micromachined gyroscope is disclosed. This micromachined gyroscope comprises a substrate, at least 3 masses m1, m2, m3 being configured to oscillate along a first direction x or y, whereby the first mass m1 is mechanically coupled to the substrate, the second mass m2 is mechanically coupled to the first mass m1 and to substrate, and the third mass m3 is mechanically coupled to the second mass m2, whereby the following relationship exist: the resonance frequency f1 of the first mass is different form the resonance frequency f3 of the third mass and the resonance frequency f2 of the second mass is substantially higher than both f1 and f2. The resonance frequency f1 = (k1+k12)/m1; the resonance frequency f2 = (k2+k12+k23)/m2 and the resonance frequency f3 = (k23)/m3 with m1, m2, m3 being the weight of respectively mass m1, m2 and m3, and k1 is the spring constant of the mechanical connection between the first mass and the substrate. k2 is the spring constant of the mechanical connection between the second mass and the substrate. k3 is the spring constant of the mechanical connection between the third mass and the substrate. k12 is the spring constant of the mechanical connection between the first mass and the second mass. k23 is the spring constant of the mechanical connection between the second mass and the third mass.

The method comprises: selecting m1, m3, k1 and k3 whereby the resonance frequency f1 is different from the resonance frequency f3, and selecting m2, k2 such that during operation of the gyroscope the resonance frequency f2 is substantially higher than the resonance frequency f1 and resonance frequency f1 being higher than resonance frequency f3. The resonance frequency f1 = (k1+k12)/m1; the resonance frequency f2 = (k2+k12+k23)/m2 and the resonance frequency f3 = (k3+k23)/m3.

A mechanical amplification may be selected between the movement of mass m1 and mass m3 and dimensioning k2 in view of this desired mechanical amplification.

## BRIEF DESCRIPTION OF THE DRAWINGS

Exemplary embodiments are illustrated in referenced figures of the drawings. It is intended that the embodiments and figures disclosed herein are to be considered illustrative rather than restrictive.

Figure 1 shows a schematic mechanical equivalent of a micromachined gyroscope comprising 3 driving masses m1, m2, m3 and 1 sensing mass m$_{sense}$, in accordance with an embodiment.

Figure 2 shows a schematic mechanical equivalent of a micromachined gyroscope comprising 3 driving masses m1, m2, m3 and 1 sensing mass m$_{sense}$, in which mass m3 is coupled to the substrate, in accordance with an embodiment.

Figure 3 shows the resonance behavior of the gyroscope shown in Figure 2: normalized displacement response (unitless) vs. frequency (Hz), in accordance with an embodiment.

Figure 4 shows a schematic mechanical equivalent of a micromachined gyroscope comprising 3 driving masses m1, m2, m3 and 1 sensing mass m$_{sense}$ whereby the sensing mass is decoupled from the driving mass m3, in accordance with an embodiment.

Figure 5 shows a schematic mechanical equivalent of a micromachined gyroscope comprising 3 driving masses m1, m2, m3 and 3 sensing mass $m_{sense-2}$, $m_{sense-3}$ whereby the sensing masses are decoupled from the driving mass m3, in accordance with an embodiment.

Figure 6 shows a schematic mechanical equivalent of a micromachined gyroscope comprising the driving masses m1, m2, m3 are arranged in a tuning fork configuration and 1 sensing mass $m_{sense}$, in accordance with an embodiment.

## DETAILED DESCRIPTION

The present disclosure contains particular embodiments and with reference to certain drawings but the disclosure is not limited thereto. The drawings described are only schematic and are non-limiting. In the drawings, the size of some of the elements may be exaggerated and not drawn on scale for illustrative purposes. The dimensions and the relative dimensions do not correspond to actual reductions to practice of the disclosure. Reference throughout this specification to "one embodiment" or "an embodiment" means that a particular feature, structure or characteristic described in connection with the embodiment is included in at least one embodiment of the present disclosure. Thus, appearances of the phrases "in one embodiment" or "in an embodiment" in various places throughout this specification are not necessarily all referring to the same embodiment, but may refer to different embodiments. Furthermore, the particular features, structures or characteristics may be combined in any suitable manner, as would be apparent to one of ordinary skill in the art from this disclosure, in one or more embodiments. The terms top, bottom, over, under and the like in the description and the claims are used for descriptive purposes and not necessarily for describing relative positions. It is to be understood that the terms so used are interchangeable under appropriate circumstances and that the embodiments of the disclosure described herein are capable of operation in other orientations than described or illustrated herein. It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a solution comprising components A and B" should not be limited to solution consisting only of components A and B. It means that with respect to the present disclosure, the only relevant components of the solution are A and B.

In this disclosure a micromachined gyroscope is disclosed. Such a micromachined gyroscope is an angular rate sensor that operates according to the Coriolis Effect described above. Such a micromachined gyroscope is manufactured using semiconductor process manufacturing steps.

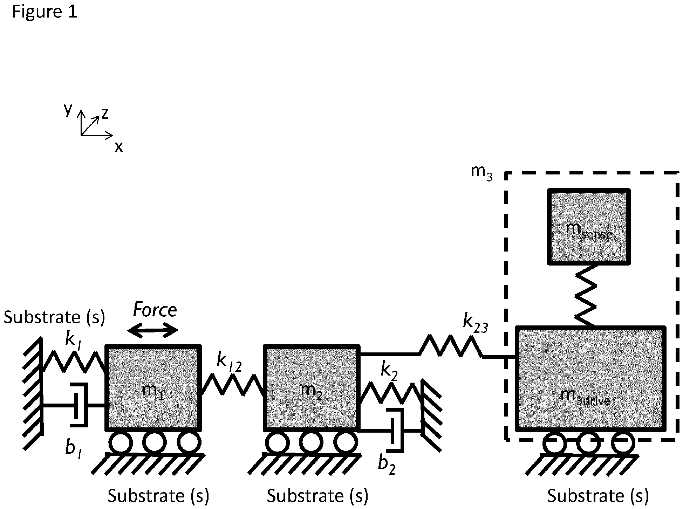

More particularly, a micromachined gyroscope is disclosed comprising a configuration of 3 masses mechanically coupled to oscillate along a first direction y. In such a 3-mass oscillation scheme, illustrated by Figure 1, mass m1 is coupled to mass m2 and to the substrate, mass m2 is coupled to mass m3 and to the substrate, while mass m3 drives the sensing part $m_{sense}$. Mass m3 is only mechanically coupled to mass m1 via the second mass m2.

Mass m1 is driven by actuators, which are typically electrostatically actuated. Although comb-drive actuators, when operated at lower voltages, can be used, it may be desirable to use parallel plate actuators, as they operate at lower voltages. Such parallel-plate actuators are more power-efficient, although they cannot provide large displacements due to their non-linear behavior. However, thanks to the mechanical amplification between the movement of mass m1 and mass m3 as discussed below, the small displacement of the parallel-plate actuators can be amplified, resulting in an appropriately higher oscillation amplitude of the third mass m3. For example, the amplitude increase from peak to peak may be several micrometers.

The third mass m3 is used as the oscillating mass which creates the Coriolis force upon external rotation. The deflection of mass m3 is sensed by the mass $m_{sense}$ moving in a direction y perpendicular to the direction x along which the driving masses m1, m2 and m3 oscillates. This mass $m_{sense}$ is, in the configuration illustrated by Figure 1, directly coupled to mass $m_{3drive}$ and as such is part of the driving mass m3.

The values of the masses m1, m2, m3, spring constants k1, k2, k3, k12, k23, and the damping levels b1 and b2 are designed to result in a large, and flat (e.g., constant) over a frequency range (e.g., 50Hz or above), displacement response for mass m3, and a mechanical amplification between mass m1 and mass m3 at this flat frequency response of mass m3. Hence, the amplitude of the oscillation of mass m1 can be small, typically less than 200nm, or even 100nm. As discussed above, this small oscillation amplitude of mass m1 allows low voltage actuation of actuators (e.g., parallel-plate actuators or comb-drive actuators). Hence, the response of mass m3 to the actuators will be robust without needing of any external circuitry, and overall power consumption will drop.

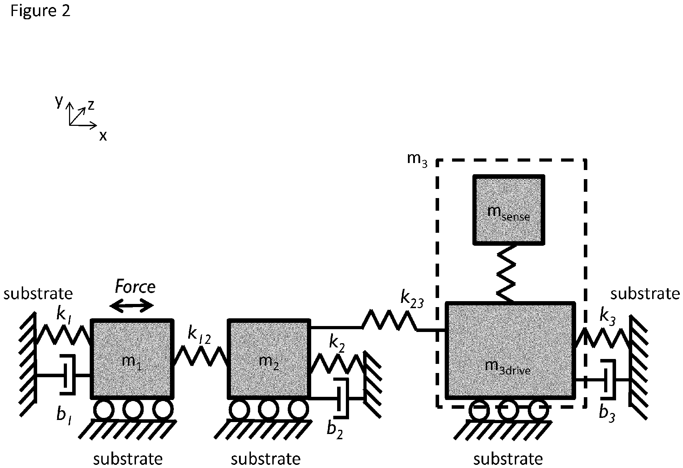

Whereas in Figure 1 mass m3 was not coupled to the substrate, Figure 2 illustrates another embodiment where mass m3 is mechanically coupled to the substrate as well. This coupling is modeled by a spring k3 and a damping b3. Such a configuration would accommodate for the imperfections coming from the fabrication of the micro machined gyroscope. If the springs k1 and k3 are designed in a similar shape, then even, if there is a process related imperfection,

4

all springs k1, k2, k3, k12, k23 are affected to the same degree. Moreover, anchoring all masses m1, m2 and m3 to the substrate minimizes the mechanical stress related to buckling/bending of the cantilevered masses and allows a larger and flatter device.

The mechanical system illustrated by Figure 2 can be modeled by three equations (1):

$$Force = m_1 \frac{\partial^2 x_1}{\partial x^2} + b_1 \frac{\partial x_1}{\partial x} + k_1 x_1 + (x_1 - x_2)k_{12}$$

$$0 = m_2 \frac{\partial^2 x_2}{\partial x^2} + b_2 \frac{\partial x_2}{\partial x} + k_2 x_2 + (x_2 - x_1)k_{12} + (x_2 - x_3)k_{23}$$

$$0 = m_3 \frac{\partial^2 x_3}{\partial x^2} + b_3 \frac{\partial x_3}{\partial x} + k_3 x_3 + (x_3 - x_2)k_{23}$$

From these 3 equations, the displacement responses of each mass m1, m2 and m3 can be derived analytically (2):

$$X_1 = \frac{Force}{k_1 + k_{12} + j\omega b_1 - m_1\omega^2 - \cfrac{\Box_{12} \quad k^2}{k_{12} + k_2 + k_{23} + j\omega b_2 - m_2\omega^2 - \cfrac{\Box_{23} \quad k^2}{k_{23} + k_3 + j\omega b_3 - m_3\omega^2}}}$$

$$X_2 = \frac{X_1 k_{12}}{k_{12} + k_2 + k_{23} + j\omega b_2 - m_2\omega^2 - \cfrac{\Box_{23} \quad k^2}{k_{23} + k_3 + j\omega b_3 - m_3\omega^2}}$$

$$X_3 = \frac{X_2 k_{23}}{k_{23} + k_3 + j\omega b_3 - m_3\omega^2}$$

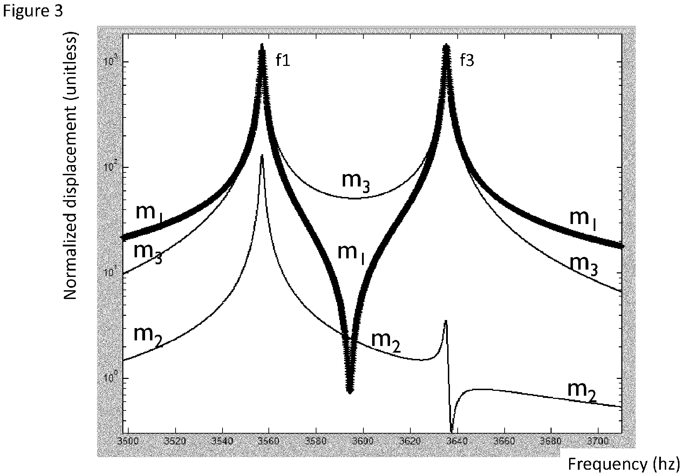

Figure 3 illustrates the resonance behavior of the 3 mass coupled oscillation configuration. The frequency of the actuating force is swept and the displacement of the actuated mass is measured with respect to the DC displacement. Hence, the y-axis of Figure 3 is representative for the quality factor of the oscillation peaks. In-between response peaks f1 and f3 a substantially flat response region is obtained. These two resonance peaks f1 and f3 are determined by the mass m1 and mass m3, when the resonance frequency of mass m2 is selected to be higher than either of both resonance peaks.

In order to achieve a flat and large mass m3 response and a mechanical amplification between mass m1 and mass m3, the following design method is applied. First, mass m2 is considered to be a non-moving rigid body whereby $k_2$ is assumed to be infinitive. Hence, the motion of mass m1 and mass m3 can be determined separately. Then, the resonant frequencies f1 and f2 of respectively mass m1 and mass m3 are equated to each other, assuming that mass m2 had no impact, as shown in equation (3).

$$\frac{k_1 + k_{12}}{m_1} = \frac{k_{23} + k_3}{m_3}$$

If the damping levels b1 and b2, and when coupled to the substrate b3, are low enough, the finite $k_2$ value will

cause the resonant frequencies f1 of mass m1 and f3 of mass m3 to separate from each other and form a robust response plateau in-between and a mechanical amplification between mass m1 and mass m3. The separation of mass m1 and mass m3 resonant frequencies and the response level of mass m3 at the plateau depend on the value of $k_2$. The higher $k_2$ is, the smaller the separation and the larger the response will be.

This mechanical amplification can be further improved by increasing the vacuum level of the environment in which the gyroscope operates or the quality factor of the individual peaks.

The position of the anti-resonance frequency of mass m1, where the mechanical amplification is the highest from mass m1 towards mass m3, can be tuned by changing k1. The value of k1 can be easily tuned if parallel plate actuators are used to actuate mass m1. However, from the application point of view, one might prefer to not operate at the anti-resonance frequency of mass m1, because that will be unstable for mass m1. In that case, the gyroscope is operated slightly off the anti-resonance frequency of mass m1 and the mechanical amplification ratio from mass m1 to mass m3 will be around 20-30 regardless of the vacuum level.

The damping levels b1, b2 (and b3 when present) or the quality factors of each resonant peak f1 and f3 have an important role on the operation of the gyroscope. If the quality factors are not large enough, the coupling cannot occur and the plateau cannot be formed.

The selection of the quality factors of the resonance frequencies f1 and f2 is a design criterion. The larger $k_2$ is, the larger the quality factors of both resonance frequencies should be. As a rule of thumb, these quality factor values should be one order of magnitude larger than the ratio of mass m2 resonant frequency to the average frequency of the plateau between the resonance frequency f1 and f3 of mass m1 and m3 when coupled via mass m2 due to the finite value of spring k2.

The position of the anti-resonance of mass m1 does not have to be at the mid-point of this plateau. This position depends on the ratio of mass m1 to mass m3, but can be tuned by altering $k_1$. So, although during the initial design phase the resonant frequencies of mass-1 and mass-3 are equated to each other f1~f3, thereby assuming mass m2 to be a non-moving body, at the end, equation (3) does not have to hold due to changed $k_1$.

The mechanical amplification between mass-1 and mass-3 depends on the operating frequency. If the operating frequency is at the anti-resonance of mass m1, the amplification ratio will be the maximum. However, this situation can bring instability to the mass m1 motion. It is proposed to operate slightly off anti-resonance. In this case the mechanical amplification ratio can realistically be 20-30.

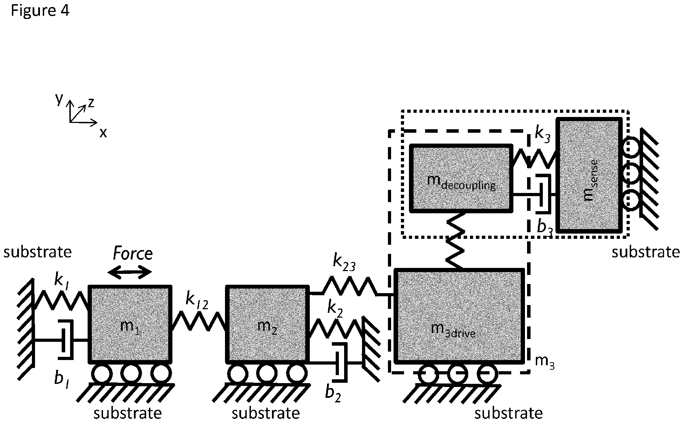

Figures 4, 5 and 6 show alternative embodiments. The proposed 3-mass coupled oscillation technique can be used wherever a 1-DOF oscillator is used within vibrating gyroscopes. Decoupled or non-decoupled sense and drive schemes and a tuning fork topology can be used. Moreover, this 3-mass oscillation topology can be used in the sensing part of the gyroscope to achieve a large bandwidth and an amplified sensitivity.

Figure 4 illustrates a micromachined gyroscope comprising 3 driving masses m1, m2 and m3 with mass m1 is coupled (k1, b1) to the substrate and to (k12) mass m2, m2 is coupled to the substrate (k2,b2) and to (k23), while the mass m3 and mass m3 drives the sensing mass $m_{sens}$ via the decoupling mass $M_{decoupling}$.

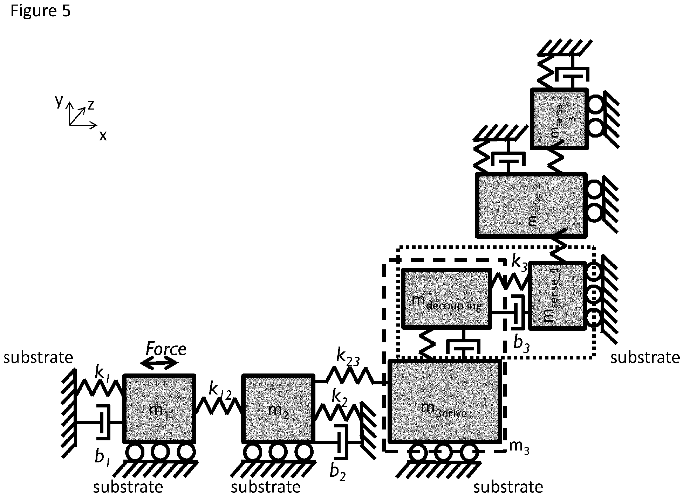

Figure 5 illustrates a micromachined gyroscope comprising 3 driving masses m1, m2 and m3 with mass m1 being coupled (k1, b1) to the substrate and to (k12) mass m2, m2 is coupled to the substrate (k2,b2) and to (k23) the mass m3 and mass m3 drives the sensing mass $m_{sens}$ via the decoupling mass $m_{decoupling}$. In this embodiment also the sensing mass $m_{sens}$ is configured as a connection for 3 mass $m_{sens\_1}$, $m_{sens\_2}$, $m_{sens\_3}$, whereby mass $m_{sens\_2}$ is coupled to the substrate and to mass $m_{sens\_2}$, $m_{sens\_2}$ is coupled to the substrate and the mass $m_{sens\_3}$. In this configuration a stable oscillation frequency range for the driving masses is obtained whereby the movement of mass m1 is mechanically amplified to mass m3, but also a stable sensing frequency range is obtained whereby the movement of mass $m_{sens\_1}$ is mechanically amplified to mass $m_{sens\_3}$.

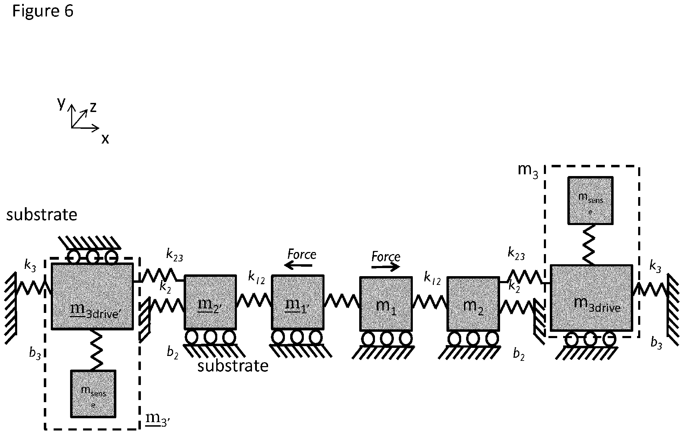

Figure 6 illustrates a micromachined gyroscope comprising 3 driving masses m1, m2 and m3 in a tuning fork configuration with mass m1 being coupled (k1, b1) to the substrate and to (k12) mass m2, m2 being coupled to the substrate (k2,b2) and to (k23) the mass m3 and mass m3 driving the sensing mass $m_{sens}$ via the decoupling mass $m_{decoupling}$. It further comprises a second series of 3 driving masses m1', m2' and m3' with mass m1' being coupled to the substrate and to (k12') mass m2', m2' being coupled to the substrate and to (k23') the mass m3' and mass m3' driving the sensing mass $m_{sens'}$. Both series of 3 mechanically coupled driving mass m1, m2 and m3 and m1', m2' and m3' are actuated by the same actuators.

The gyroscope further includes driving means to drive the first mass m1. The driving means may be, for example, one or more parallel plate electrostatic actuators.

**Claims**

**1.** A micro machined gyroscope comprising:

- a substrate (s),
- 3 driving masses (m1, m2, m3) configured to oscillate along a first direction, the first mass (m1) being mechanically coupled to the substrate (s), the second mass (m2) being mechanically coupled to the first mass (m1) and to the substrate, and the third mass (m3) being mechanically coupled to the second mass (m2),
- a driving means to drive the first mass (m1),
- and a sensing mass (msense) sensing the deflection of the third mass (m3)

**characterized in that**

the resonance frequency f1 of the first mass is different from the resonance frequency f3 of the third mass, and the resonance frequency f2 of the second mass is substantially higher than both f1 and f3,

where f1=(k1+k12)/m1, f2=(k2+k12+k23)/m2, f3=(k23)/m3,

where m1, m2, m3 is the weight of respectively the first, the second and the third mass, and

where k1 is the the spring constant of the mechanical connection between the first mass and the substrate,

where k2 is the spring constant of the mechanical connection between the second mass and the substrate,

where k12 is the spring constant of the mechanical connection between the first mass and the second mass,

where k23 is the spring constant of the mechanical connection between the second mass and the third mass.

2. The micromachined gyroscope of claim 1, wherein the third mass (m3) is mechanically coupled to the substrate (s) and where f3=(k3+k23)/m3 with k3 being the spring constant of the mechanical connection between of the third mass and the substrate.

3. The micromachined gyroscope of claim 1 or 2, wherein the driving means is one or more parallel plate electrostatic actuators.

4. The micromachined gyroscope of any of the claims 1 to 3, further comprising a duplicate (m1', m2', m3') of the 3 driving mass configuration (m1, m2, m3) of claim 1, this duplicate being configured to oscillate along the first direction but in opposite phase to the 3 driving masses (m1, m2, m3) of claim 1.

5. The micromachined gyroscope of any of the claims 1 to 4, wherein the 3 driving masses (m1, m2, m3, m1', m2', m3') are configured to oscillate in a linear way.

6. A computer-implemented method for designing a micromachined gyroscope according to any of claim 2 to 5, the method comprising:

   selecting the first mass (m1), the spring constant (k1) between the first mass (m1) and the substrate (s), the third mass (m3), and the spring constant (k3) between the third mass and the substrate whereby the resonance frequency f1 is different from the resonance frequency f3, and, selecting the second mass (m2) and the spring constant (k2) between the second mass and the substrate, such that, during operation, the resonance frequency f2 is substantially higher than the resonance frequency f1 and that the resonance frequency f1 is higher than the resonance frequency f3.

**Patentansprüche**

1. Mikrogefertigtes Gyroskop, umfassend:

   - ein Substrat (s),
   - 3 Antriebsmassen (m1, m2, m3), die so ausgelegt sind, dass sie entlang einer ersten Richtung schwingen, wobei die erste Masse (m1) mechanisch mit dem Substrat (s) gekoppelt ist, wobei die zweite Masse (m2) mechanisch mit der ersten Masse (m1) und mit dem Substrat gekoppelt ist, und wobei die dritte Masse (m3) mechanisch mit der zweiten Masse (m2) gekoppelt ist,
   - ein Antriebsmittel, um die erste Masse (m1) anzutreiben,
   - und eine Abfühlmasse (msense), die die Auslenkung der dritten Masse (m3) abfühlt,

   **dadurch gekennzeichnet, dass**

   sich die Resonanzfrequenz f1 der ersten Masse von der Resonanzfrequenz f3 der dritten Masse unterscheidet, und die Resonanzfrequenz f2 der zweiten Masse wesentlich höher ist als sowohl f1 als auch f3,

   wobei f1=(k1+k12)/m1, f2=(k2+k12+k23)/m2, f3=(k23)/m3,

   wobei m1, m2, m3 das Gewicht der ersten, der zweiten bzw. der dritten Masse ist, und

wobei k1 die Federkonstante der mechanischen Verbindung zwischen der ersten Masse und dem Substrat ist, wobei k2 die Federkonstante der mechanischen Verbindung zwischen der zweiten Masse und dem Substrat ist, wobei k12 die Federkonstante der mechanischen Verbindung zwischen der ersten Masse und der zweiten Masse ist, wobei k23 die Federkonstante der mechanischen Verbindung zwischen der zweiten Masse und der dritten Masse ist.

2. Mikrogefertigtes Gyroskop nach Anspruch 1, wobei die dritte Masse (m3) mechanisch mit dem Substrat (s) gekoppelt ist, und wobei f3=(k3+k23)/m3, wobei k3 die Federkonstante der mechanischen Verbindung zwischen der dritten Masse und dem Substrat ist.

3. Mikrogefertigtes Gyroskop nach Anspruch 1 oder 2, wobei es sich bei dem Antriebsmittel um einen oder mehrere elektrostatische Parallelplattenaktoren handelt.

4. Mikrogefertigtes Gyroskop nach einem der Ansprüche 1 bis 3, das weiter ein Doppel (m1', m2', m3') der Konfiguration mit 3 Antriebsmassen (m1, m2, m3) nach Anspruch 1 umfasst, wobei dieses Doppel so ausgelegt ist, dass es entlang der ersten Richtung, aber gegenphasig zu den 3 Antriebsmassen (m1, m2, m3) nach Anspruch 1 schwingt.

5. Mikrogefertigtes Gyroskop nach einem der Ansprüche 1 bis 4, wobei die 3 Antriebsmassen (m1, m2, m3, m1', m2', m3') so ausgelegt sind, dass sie linear schwingen.

6. Computerimplementiertes Verfahren zum Konzipieren eines mikrogefertigten Gyroskops nach einem aus Anspruch 2 bis 5, wobei das Verfahren umfasst:

Auswählen der ersten Masse (m1), der Federkonstante (k1) zwischen der ersten Masse (m1) und dem Substrat (s), der dritten Masse (m3), und der Federkonstante (k3) zwischen der dritten Masse und dem Substrat, wobei sich die Resonanzfrequenz f1 von der Resonanzfrequenz f3 unterscheidet, und
Auswählen der zweiten Masse (m2) und der Federkonstante (k2) zwischen der zweiten Masse und dem Substrat so, dass im Betrieb die Resonanzfrequenz f2 wesentlich höher ist als die Resonanzfrequenz f1, und dass die Resonanzfrequenz f1 höher ist als die Resonanzfrequenz f3.

**Revendications**

1. Gyroscope micro-usiné comprenant :

- un substrat (s),
- 3 masses d'entraînement (m1, m2, m3) configurées pour osciller le long d'une première direction, la première masse (m1) étant couplée mécaniquement au substrat (s), la deuxième masse (m2) étant couplée mécaniquement à la première masse (m1) et au substrat, et la troisième masse (m3) étant couplée mécaniquement à la deuxième masse (m2),
- un moyen d'entraînement pour entraîner la première masse (m1),
- et une masse de détection (msense) détectant la déflexion de la troisième masse (m3)

**caractérisé en ce que**
la fréquence de résonance f1 de la première masse est différente de la fréquence de résonance f3 de la troisième masse, et
la fréquence de résonance f2 de la deuxième masse est sensiblement supérieure à la fois à f1 et à f3,
où f1=(k1+k12)/m1, f2=(k2+k12+k23)/m2, f3=(k23)/m3,
où m1, m2, m3 est le poids de respectivement la première, la deuxième et la troisième masse, et
où k1 est la constante de ressort de la connexion mécanique entre la première masse et le substrat,
où k2 est la constante de ressort de la connexion mécanique entre la deuxième masse et le substrat,
où k12 est la constante de ressort de la connexion mécanique entre la première masse et la deuxième masse,
où k23 est constante de ressort de la connexion mécanique entre la deuxième masse et la troisième masse.

2. Gyroscope micro-usiné selon la revendication 1, dans lequel la troisième masse (m3) est couplée mécaniquement au substrat (s) et où f3=(k3+k23)/m3 avec k3 étant la constante de ressort de la connexion mécanique entre la troisième masse et le substrat.

3. Gyroscope micro-usiné selon la revendication 1 ou 2, dans lequel le moyen d'entraînement est un ou plusieurs actionneurs électrostatiques à plaque parallèle.

4. Gyroscope micro-usiné selon l'une quelconque des revendications 1 à 3, comprenant en outre un double (m1', m2', m3') de la configuration des 3 masses d'entraînement (m1, m2, m3) selon la revendication 1, ce double étant configuré pour osciller le long de la première direction, mais en phase opposée aux 3 masses d'entraînement (m1, m2, m3) selon la revendication 1.

5. Gyroscope micro-usiné selon l'une quelconque des revendications 1 à 4, dans lequel les 3 masses d'entraînement (m1, m2, m3, m1', m2', m3') sont configurées pour osciller de façon linéaire.

6. Procédé implémenté par ordinateur pour concevoir un gyroscope micro-usiné selon l'une quelconque des revendications 2 à 5, le procédé comprenant les étapes consistant à :

sélectionner la première masse (m1), la constante de ressort (k1) entre la première masse (m1) et le substrat (s), la troisième masse (m3), et la constante de ressort (k3) entre la troisième masse et le substrat selon lequel la fréquence de résonance f1 est différente de la fréquence de résonance f3, et,
sélectionner la deuxième masse (m2) et la constante de ressort (k2) entre la deuxième masse et le substrat, de sorte que, pendant le fonctionnement, la fréquence de résonance f2 est sensiblement supérieure à la fréquence de résonance f1 et que la fréquence de résonance f1 est supérieure à la fréquence de résonance f3.

Figure 1

Figure 2

Figure 3

Figure 4

Figure 5

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1568968 A2
- GB 2302177 A
- US 20090193892 A
- US 6044707 A
- JP 2008281485 B